Europäisches Patentamt

European Patent Office

Office européen des brevets

(11) Publication number: **0 041 133**
**B1**

## (12) EUROPEAN PATENT SPECIFICATION

(45) Date of publication of patent specification: **04.12.85**

(51) Int. Cl.⁴: **G 11 B 5/40,** G 11 B 5/127

(21) Application number: **81103370.3**

(22) Date of filing: **05.05.81**

(54) **Magnetic head assemblies.**

(30) Priority: **02.06.80 US 155348**

(43) Date of publication of application:
**09.12.81 Bulletin 81/49**

(45) Publication of the grant of the patent:
**04.12.85 Bulletin 85/49**

(84) Designated Contracting States:
**DE FR GB NL**

(56) References cited:
**DE-A-1 474 505**
**DE-A-2 727 532**
**DE-B-1 111 413**
**US-A-3 344 237**
**US-A-3 975 771**

**IBM TECHNICAL DISCLOSURE BULLETIN, vol.
17, no. 9, Feburary 1975, ARMONK N.Y. (US)
J.A. BARKLEY et al.: "Thin-film transducer
protection", page 2549**

**IBM TECHNICAL DISCLOSURE BULLETIN, vol.
21, no. 11, April 1979, ARMONK, N.Y. (US) J.E.
ROHEN: "Electrostatic shielding for
magnetoresistive read heads", pages 4459-
4460**

(73) Proprietor: **International Business Machines
Corporation
Old Orchard Road
Armonk, N.Y. 10504 (US)**

(72) Inventor: **Elsel, Karl Heinz
1730 Hudson Drive
San Jose California (US)**
Inventor: **Kerl, Russel Ray
6872 Burnside Drive
San Jose California (US)**

(74) Representative: **Lewis, Alan John
IBM United Kingdom Patent Operations Hursley
Park
Winchester, Hants, SO21 2JN (GB)**

# Description

The invention relates to magnetic head assemblies.

A major problem that is found during the manufacture of magnetic recording heads, particularly of the thin film type, is the spurious discharge of static electricity which has been undesirably generated. Static charges may be produced by the presence of certain materials, such as plastics, which are present in the surroundings at the place of manufacture of the magnetic heads. When there is a static discharge, between a magnetic pole piece and an adjacent conductive layer, the pole piece may be damaged, particularly at a critical sensing portion, such as at the tip of the pole piece which is exposed and disposed adjacent to the transducing gap facing the record medium.

In addition, the dielectric or insulating material that surrounds the magnetic head coil would break down from the discharge effect. As a result, the head assembly is subject to deterioration and degradation so that it is rendered virtually useless.

Present approaches to alleviate this problem involves the grounding of operators, table tops, or the use of ion producing fans and air hose nozzle application, by way of example. Also, the materials used for storage containers and work trays must be carefully selected. However, the basic problem of spurious discharge at the critical pole tip area is not completely solved by these approaches.

The problem caused by static electricity also exists during normal use of magnetic head assemblies.

The present invention overcomes the problem by providing, in a magnetic head assembly, relatively short discharge bypass paths to conduct spurious static electrical charge away from the pole pieces at critical areas of the magnetic transducer, such as the transducing gap and air bearing surface.

Accordingly the invention provides a magnetic head assembly comprising an electrically conductive support; transducer means mounted on said support but spaced therefrom by a dielectric insulating layer, said transducer means comprising two pole pieces defining a transducer gap, an associated read/write conductor embedded in dielectric insulating material and first conductor means for conducting read/write signals to and from the transducer means; said assembly being characterised by the provision of means for discharging electrostatic charge from the transducer means, said discharging means comprising second conductor means providing part of a primary electrostatic discharge path of relatively low resistance from the first conductor means to the electrically conductive support in parallel with a potential secondary electrostatic discharge path, including the pole tip, to the conductive support whereby the primary discharge path is sufficiently spaced from the pole tips and conducts at an electrostatic voltage below that at which the potential discharge path would conduct.

The invention will now be more particularly described with reference to the accompanying drawings in which:—

Figure 1 is a sectional side view of a thin film head deposited on a conductive slider, to exemplify the problem and the solution provided by the invention;

Figure 2 is an isometric diagrammatic representation, partly cut away, viewed from the bottom of a head slider, depicting part of the structure of a magnetic head embodying the invention; and

Figure 3 is a diagrammatic sectional view, taken along line A—A of Figure 2, of the slider assembly, to aid in the explanation of the invention.

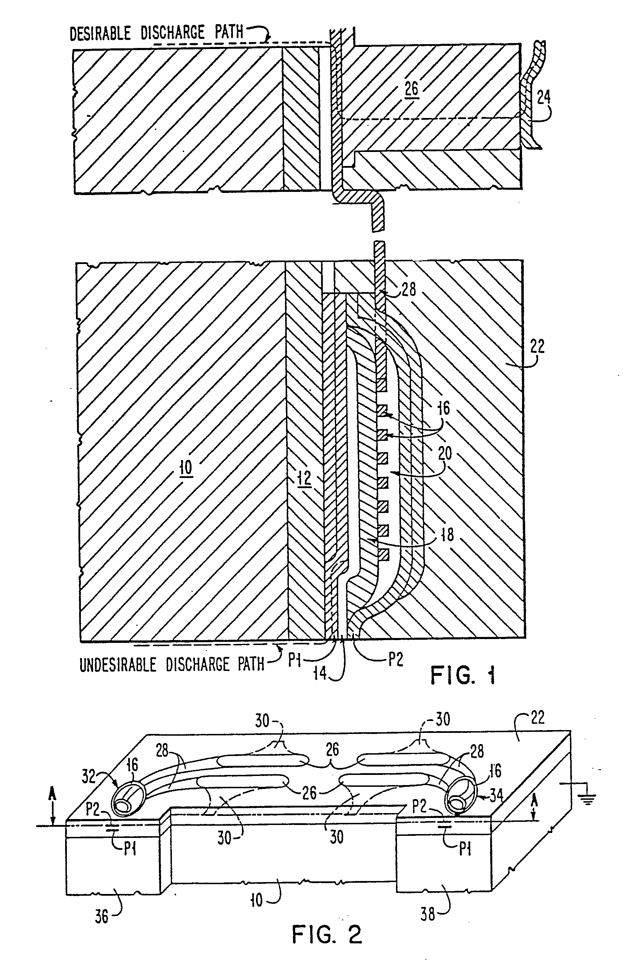

With reference to Figure 1, a magnetic head assembly comprises an air bearing slider support 10 on which a thin film transducer is deposited. The slider support 10 is formed from an electrically conductive material, which may be ceramic, and a dielectric insulating layer 12 serving as an undercoat is disposed between the first pole piece P1 of the transducer and the air bearing slider 10. A non-magnetic insulating layer forms a transducing gap 14 between the tips of the pole pieces P1 and P2 of the thin film transducer. To coact with the magnetic circuit formed by the pole pieces P1 and P2, a planar conductive coil 16 of several turns is located between the pole pieces. The electrical coil 16 is embedded in insulating material 18 and 20. To protect the thin film transducer, an insulating overcoat 22 is deposited over the topmost P2 pole piece. The P1 and P2 pole pieces are preferably made from Ni—Fe (Permalloy), which is an electrically conductive material.

The assembly shown in Figure 1 is basically similar to that described by Robert E. Jones, Jr in an article entitled IBM 3370 Film Head Design and Fabrication at pages 6 and 9 of a booklet entitled Disk Storage Technology, dated February 1980 and obtainable from International Business Machines Corporation under the reference GA26—1665—0. The booklet carries the Congress Library identification ISBN 0—933186—02—9. Thus, the magnetic head assembly shown in Figure 1 and that described in the Jones article comprise an electrically conductive support (10); electro-magnetic transducer means mounted on an insulating layer (12) on the support and comprising two pole pieces (P1, P2) defining a transducer gap (14) and an associated read/write conductor (16) embedded in dielectric insulating material (18, 20, 22); and first conductor means (24, 26, 28) for conducting read/write signals to the transducer means.

The electrical signal, which is provided to the coil 16 only half of which is shown in Figure 1, during the write mode, is applied to a conductive wire 24 connected to a stud 26 formed with the transducer. The input signal passes from the stud 26 through a conductive lead 28 that is connected to the coil 16. The same conductive path is employed during the read mode when the magnetic disk or tape is sensed by the magnetic circuit and transduced to an electrical signal in the coil, which electrical signal is directed from the transducer to a utilization circuit for readout. Static electricity is known to be generated at areas associated with the head assembly. The electrical charges migrate from the areas at which they are generated to build up along conductive paths. Thus in devices of the type depicted in Figure 1, a build-up of static charge occurs that subsequently results in a discharge from one conductive element (e.g. coil 16) across the dielectric 18, which experiences "breakdown", to another conductive element (e.g. pole piece P2) in the manner of a capacitive discharge. The charge on P2 is discharged to pole piece P1 and to the conducting support 10. This discharge path is labelled "undesirable discharge path" in Figure 1. The discharge usually causes damage by burnout or the like at the areas of the conductive material which act as terminals for the discharge of the stored static electrical energy. It has been found that such damage occurs at the pole tip of the conductive P1 pole piece, which degrades the effectiveness of the head assembly or renders it useless.

In accordance with this invention, means are provided for preventing discharge of electrostatic charges through the dielectric insulating material between and surrounding the pole pieces P1, P2 and conductor 16. These means comprise conductive discharge paths, labelled "desirable discharge path" in Figure 1, provided over the head slider assembly, so that static electrical charge bypasses the pole pieces P1 and P2 and transducing gap areas of the thin film transducers 32 and 34. The transducers 32 and 34 (see the referenced Jones Jr article) are located at the surfaces of air bearing rails 36 and 38 respectively, so that the pole tips of the pole pieces P1 and P2 and the transducing gaps 14 of the transducer are exposed for transducing coaction with a magnetic medium.

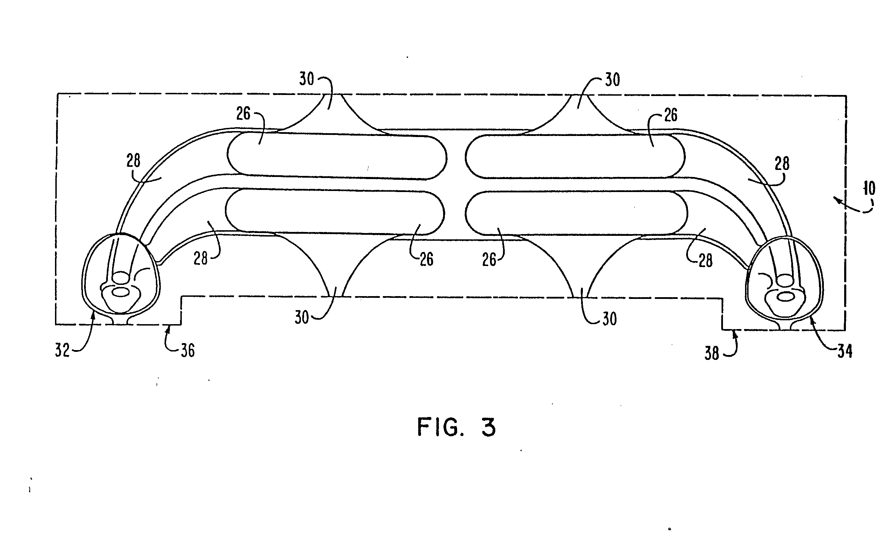

The desirable discharge paths are formed by layers 30 of a conductive material such as permalloy, gold or silver, which are deposited within recesses formed within the overcoat insulating layer 22. The conductive layers 30 are connected to the studs 26 of the transducers 32 and 34, and terminate, as best shown in Figure 3, at the edges of the insulating layer 22 at locations adjacent to the conductive slider support 10. The air bearing head slider assembly is fixed within a disk drive assembly, by way of example, so that the conductive slider support is connected to ground potential. In this way, effective low resistance bleed paths to ground are established.

By virtue of the configuration provided, whenever sufficient static charge is built up in the lead wires 24 of the transducers, or at associated areas of the transducers, a discharge occurs across the gaps formed between the conductive layers 30 and the grounded conductive slider support 10 at the exposed edges of the insulating layer 22. These electrical discharges through the ionized low resistance bleed path are sufficiently displaced from the critical pole piece and gap areas so that no effective damage occurs to the transducers.

By providing the alternate bypass path of lesser electrical resistance, spurious electrical charges are diverted from the critical areas of the pole tips and gaps, and dissipated without adversely affecting the magnetic head structure. Costly measures generally employed for preventing discharge damage are avoided, and production yields are increased.

## Claims

1. A magnetic head assembly comprising an electrically conductive support (10); transducer means (32, 34) mounted on said support but spaced therefrom by a dielectric insulating layer (12), said transducer means comprising two pole pieces (P1, P2) defining a transducer gap, an associated read/write conductor (16) embedded in dielectric insulating material (18, 20, 22) and first conductor means (24, 26, 28) for conducting read/write signals to and from the transducer means; said assembly being characterised by the provision of means for discharging electrostatic charge from the transducer means, said discharging means comprising second conductor means (30) providing part of a primary electrostatic discharge path (desirable discharge path in Figure 1) of relatively low resistance from the first conductor means to the electrically conductive support in parallel with a potential secondary electrostatic discharge path (undesirable discharge path in Figure 1), including the pole tip, to the conductive support (10) whereby the primary discharge path is sufficiently spaced from the pole tips and conducts at an electrostatic voltage below that at which the potential discharge path would conduct.

2. A magnetic head assembly as claimed in claim 1, in which said support (10) comprises an air-bearing slider, and in which said second conductor means (30) are embedded in said dielectric insulating material (22) and extend to a position spaced from the conductive support (10) by said insulating layer (12) so that the primary discharge path includes a primary discharge gap between the second conductor means and the conductive support.

3. A magnetic head assembly as claimed in claim 1 or 2, in which the read/write conductor comprises a planar coil embedded in the insulating material (18, 20) and having its two ends respectively connected to two studs (26) accessible from exterior of the head, and in which the second conducting means comprises two planar conductors (30) contacting the two studs (26), embedded in the dielectric insulating material (22) and extending to an edge face of said material.

## Revendications

1. Ensemble de tête magnétique constitué d'un support (10) électriquement conducteur; de moyens transducteurs (32, 34) montés sur ce support mais espacés par rapport à lui par une couche isolante (12) diélectrique, les moyens transducteurs comportant deux pièces polaires (P1, P2) définissant un entrefer transducteur, un conducteur (16) de lecture-enregistrement associé enrobé dans le matériau isolant diélectrique (18, 20, 22) et des premiers moyens conducteurs (24, 26, 28) pour conduire des signaux de lecture-enregistrement vers et depuis les moyens transducteurs; cet ensemble étant caractérisé par la présence d'un moyen pour décharger la charge électrostatique des moyens transducteurs, ce moyen de décharge étant constitué de deuxièmes moyens conducteurs (30) réalisant une partie d'un trajet primaire de décharge électrostatique (trajet de décharge souhaitable de la figure 1) à résistance relativement basse entre le premier moyen conducteur et le support électriquement conducteur en parallèle avec un trajet secondaire de décharge électrostatique de tension (trajet de décharge non souhaitable de la figure 1), incluant l'extrémité polaire, vers le support conducteur (10), grâce à quoi le trajet de décharge primaire est suffisamment espacé des extrémités polaires et conduit à une tension électrostatique inférieure à celle à laquelle conduirait le trajet de décharge de tension.

2. Ensemble de tête magnétique selon la revendication 1, dans lequel le support (10) est constitué d'un curseur sur palier à air et dans lequel les seconds moyens conducteurs (30) sont enrobés dans le matériau isolant diélectrique (22) et s'étendent jusqu'à une position espacée par rapport au support conducteur (10) par la couche isolante (12), si bien que le trajet de décharge primaire comporte un entrefer de décharge primaire entre les seconds moyens conducteurs et le support conducteur.

3. Ensemble de tête magnétique selon la revendication 1 ou 2, dans lequel le conducteur de lecture-enregistrement est constitué d'un enroulement plan enrobé dans le matériau isolant (18, 20) et ayant ses deux extrémités respectivement reliées à deux plots (26) accessibles de l'extérieur de la tête, et dans lequel le second moyen conducteur est constitué de deux conducteurs plans (30) venant au contact des deux plots (26), enrobés dans le matériau isolant diélectrique (22) et s'étendant jusqu'à une face latérale de ce matériau.

## Patentansprüche

1. Magnetkopfeinheit einer elektrisch leitenden Halterung (10); mit an der Halterung befestigten, jedoch durch eine dielektrische Isolierschicht (12) davon getrennten Wandlern (32, 34) welche zwei Polteile (P1, P2) mit einem Wandlerspalt, einen zugeordneten, in dielektrisches Isoliermaterial (18, 20, 22) gebetteten Lese/Schreibleiter (16), sowie erste Leiter (24, 26, 28) Zur Leitung von Schreib/Lese-Signalen von und zu den Wandlern aufweisen, gekennzeichnet durch Mittel zur elektrostatischen Entladung der Wandler, wobei diese Entladungsmittel zweite Leiter (30) aufweisen, welche einen Teil eines relativ niederohmigen primären Pfades zur elektrostatischen Entladung (erwünschter Entladungspfad nach Fig. 1) von der ersten Leitern zur elektrisch leitenden Halterung parallel zu einem möglichen sekundären Pfad (nichterwünschter Entladungspfad nach Fig. 1), welcher die Polspitzen umfaßt, führen, wobei der primäre Pfad zur elektrostatischen Entladung einen ausreichenden Abstand zu den Polspitzen aufweist und bei einer elektrostatischen Spannung leitet, die unter der liegt, bei welcher der mögliche Entladepfad leiten würde.

2. Magnetkopfeinheit nach Anspruch 1, dadurch gekennzeichnet, daß die Halterung (10) einen Luftpolsterschlitten aufweist, und daß die zweiten Leiter (30) in dem dielektrischen Isoliermaterial (22) eingebettet sind und sich bis zu einem Punkt erstrecken, welcher von der leitenden Halterung (10) durch die Isolierschicht (12) getrennt ist, so daß der primäre Entladepfad einen primären Entladespalt zwischen den zweiten Leitern und der leitenden Halterung aufweist.

3. Magnetkopfeinheit nach den Ansprüchen 1 oder 2, dadurch gekennzeichnet, daß der Lese/Schreib-Leiter eine Planarwicklung innerhalb des Isoliermaterials (18, 20) aufweist und seine beiden jeweiligen Enden mit zwei Stiften (26) verbunden sind, auf welche von außerhalb des Kopfes zugegriffen werden kann, und daß die zweiten Leiter zwei Planarleiter (30) sind, welche die beiden Stifte berühren, die sich in dem dielektrischen Isoliermaterial (22) befinden und sich bis zu einer Randseite des Materials erstrecken.

DESIRABLE DISCHARGE PATH

FIG. 1

UNDESIRABLE DISCHARGE PATH

FIG. 2

FIG. 3